Europäisches Patentamt

European Patent Office

Office européen des brevets

(11) veröffentlichungsnummer: **0 016 328**
**A1**

(12) **EUROPÄISCHE PATENTANMELDUNG**

(21) Anmeldenummer: 80100596.8

(51) Int. Cl.³: **F 16 L 59/14**

(22) Anmeldetag: 06.02.80

(30) Priorität: 20.03.79 DE 2910802

(43) Veröffentlichungstag der Anmeldung:
01.10.80 Patentblatt 80/20

(84) Benannte Vertragsstaaten:
AT BE CH DE FR GB IT LU NL SE

(71) Anmelder: Zipper-Technik GmbH
Waldstrasse 55/57
D-6078 Neu-Isenburg(DE)

(72) Erfinder: Luedtke, Siegfried
Arnulfstrasse 142
D-8000 München 19(DE)

(72) Erfinder: Vollhardt, Friedrich
Tulpenstrasse 12
D-6078 Neu-Isenburg(DE)

(74) Vertreter: Selting, Günther, Dipl.-Ing. et al,
Deichmannhaus
D-5000 Köln 1(DE)

(54) Flexible Umhüllung für Rohre u. dgl.

(57) Eine flexible Umhüllung für die thermische oder akustische Isolierung von Rohren weist einen flexiblen Mantel (10) mit längslaufenden zusammengreifenden Klemmprofilstücken (12, 13) auf. Die Klemmprofilstücke (12, 13) stehen von dem geschlossenen Mantel (10) radial nach außen ab und werden von einer Klammer (23) gegeneinandergedrückt.

FIG. 1

EP 0 016 328 A1

VON KREISLER   SCHÖNWALD   EISHOLD   FUES
VON KREISLER   KELLER   SELTING   WERNER

Anmelder

Zipper-Technik
Kunststoff-Ummantelungen GmbH
Waldstraße 55/57

6078 Neu-Isenburg

PATENTANWÄLTE

Dr.-Ing. von Kreisler † 1973

Dr.-Ing. K. Schönwald, Köln
Dr.-Ing. K. W. Eishold, Bad Soden
Dr. J. F. Fues, Köln
Dipl.-Chem. Alek von Kreisler, Köln
Dipl.-Chem. Carola Keller, Köln
Dipl.-Ing. G. Selting, Köln
Dr. H.-K. Werner, Köln

DEICHMANNHAUS AM HAUPTBAHNHOF
D-5000 KÖLN 1
19. März 1979
Sg/En

Flexible Umhüllung für Rohre u.dgl.

Die Erfindung betrifft eine flexible Umhüllung für die
thermische oder akustische Isolierung von Rohrleitungen
u.dgl., mit einem flexiblen Mantel, der längslaufende
zusammengreifende Klemmprofilstücke aufweist.

Es ist bekannt, elektrische Leitungsbündel, Rohrleitungen u.dgl. mit einer Kunststoffumhüllung, zu versehen,
die aus einem Folienmantel mit längslaufenden Klemmprofilstücken besteht (US-PS 2 960 561, US-PS 3 089 915).
Der Folienmantel wird um den zu umhüllenden Strang herumgelegt und seine zusammengreifenden Profilstücke werden
nach Art eines Reißverschlusses mit einem Schieber geschlossen. Die Profilstücke liegen etwa in der Ebene des
Folienmantels und im geschlossenen Zustand verläuft die
Verbindungslinie der Klemmprofilstücke etwa in Umfangs-

- 2 -

richtung des Folienmantels. Während das eine Klemmprofilstück längs des einen Randes des Folienmantels angeschweißt ist, ist das andere Klemmprofilstück auf der Fläche des Folienmantels befestigt, so daß der Folienmantel eine unter der Klemmverbindung liegende Lasche bildet, die verhindert, daß die Klemmprofilstücke direkt mit dem zu ummantelnden Strang in Berührung kommen.

Bei den bekannten Kunststoffumhüllungen ist die mechanische Belastbarkeit der Klemmverbindung sehr begrenzt. Die ineinandergreifenden Klemmprofilstücke lösen sich bei großem Innendruck voneinander, so daß die Reißverschlußverbindung aufplatzen kann. Dies ist insbesondere bei der Umhüllung von Rohrleitungen der Fall, wenn sich zwischen der Rohrleitung und der Kunststoffumhüllung noch ein Isoliermaterial befindet, das durch die geschlossene Kunststoffumhüllung zusammengedrückt wird, und seinerseits einen nach außen gerichteten Druck auf die Kunststoffumhüllung ausübt.

Dampfleitungen in Kraftwerken, Schiffen u.dgl. werden mit Umhüllungen isoliert, die mit Haken verschlossen werden. Zwischen die Rohrwand und die Umhüllung werden Kissen eines wärmeisolierenden Materials gepackt.

Aufgabe der Erfindung ist es, eine flexible Umhüllung der eingangs genannten Art zu schaffen, die einem größeren Innendruck standhält, ohne daß die Verbindungsnaht auseinanderplatzt, und die einfach und schnell zu montieren ist.

0016328

Zur Lösung dieser Aufgabe ist erfindungsgemäß vorgesehen, daß die Klemmprofilstücke von dem geschlossenen Mantel nach außen abstehen, und daß eine die beiden Klemmprofilstücke umgreifende Klammer vorgesehen ist.

Diese Verschlußart zeichnet sich durch eine hohe Festigkeit aus, so daß die Umhüllung speziell geeignet ist, um thermische und akustische Ummantelungen von Rohrleitungen und Behältern u.a. in Kraftwerken, Kernreaktoren und Schiffen durchzuführen. Auch die Umhüllung von Kesseln, Kabeln und beliebigen strangförmigen Elementen ist in dieser Weise möglich. Die Klammer dient zur Sicherung des Verschlusses. In geeigneten Abständen können mehrere gleichartige Klammern über die ineinandergreifenden Klemmprofilstücke gesetzt werden. Im Extremfall werden die Klammern dicht nebeneinander angeordnet, so daß sie die zusammengreifenden Klemmprofilstücke über die gesamte Länge der geschlossenen Umhüllung bedecken. Der Verschluß kann ohne Werkzeuge und ohne Schieber geschlossen und später relativ einfach wieder geöffnet werden. Auch wenn der Verschluß unter Spannung geschlossen werden muß, öffnet er sich nicht unbeabsichtigt, auch wenn die Innenseite der Umhüllung mit einem thermischen oder akustischen Material versehen ist, das einen nach außen gerichteten Druck ausübt.

Die Klemmprofilstücke bestehen vorzugsweise aus einem Metall, beispielsweise Aluminium, oder aus einem Kunststoff, wie Polyvinylchlorid oder Polyurethan, und die elastische Klammer kann aus einem Federstahl bestehen.

Zweckmäßigerweise stoßen die Klemmprofilstücke entlang einer im wesentlichen radial zu dem geschlossenen Mantel verlaufenden Linie gegeneinander. Sie rasten auch ohne die zusätzliche Klammer ineinander, so daß ein gewisser Zusammenhalt auch ohne Klammer bereits gegeben ist, wenn die Klemmprofilstücke ineinandergedrückt worden sind. Anschließend können die einzelnen Klammern auf die zusammengesetzten Klemmprofilstücke aufgedrückt werden. Die Klammern verhindern das Auseinanderziehen der Klemmprofilstücke tangential zu dem geschlossenen Mantel. Sie bilden somit eine Arretierung, die selbst durch große Umfangskräfte des Mantels nicht gelöst werden kann, sondern nur durch radiales Abheben der Klammer.

Vorzugsweise weist der Mantel eine Materialbahn auf, an die Fußteile der Klemmprofilstücke angeschweißt sind. Dies ergibt einfache Herstellungsmöglichkeiten für die Umhüllung.

Die Klemmprofilstücke können im zusammengesetzten Zustand einen hinterschnittenen Wulst bilden, wobei die Klammer derart ausgebildet ist, daß sie mit ihren Armen in die Hinterschneidungen eingreift und den Wulst zangenförmig umspannt. Die sich dadurch ergebende Klemmverbindung kann selbst durch große Innendrücke in der geschlossenen Umhüllung nicht auseinandergesprengt werden.

Im folgenden wird unter Bezugnahme auf die Figuren ein bevorzugtes Ausführungsbeispiel näher erläutert. Es zeigen:

Figur 1 eine perspektivische Darstellung der geschlossenen Umhüllung vor dem Aufsetzen einer Klammer,

- 5 -

Figur 2 in vergrößertem Maßstab eine perspektivische Darstellung des weiblichen Klemmprofilstückes, und

Figur 3 eine perspektivische Darstellung des männlichen Klemmprofilstückes.

Bei der dargestellten Umhüllung besteht der Mantel 10 aus einer langgestreckten Materialbahn 11 aus einem Glasfasergewebe, Glasasbest, einem mineralischen Gewebe oder Kevlargewebe, die längs ihres einen Randes das angeklemmte Klemmprofilstück 12 aufweist. Das andere Klemmprofilstück 13 ist mit Abstand von dem anderen Rand 14 an der Materialbahn 11 befestigt, so daß im Inneren des geschlossenen Mantels eine Lasche 15 entsteht, die die Klemmprofilstücke 12, 13 von unten bedeckt.

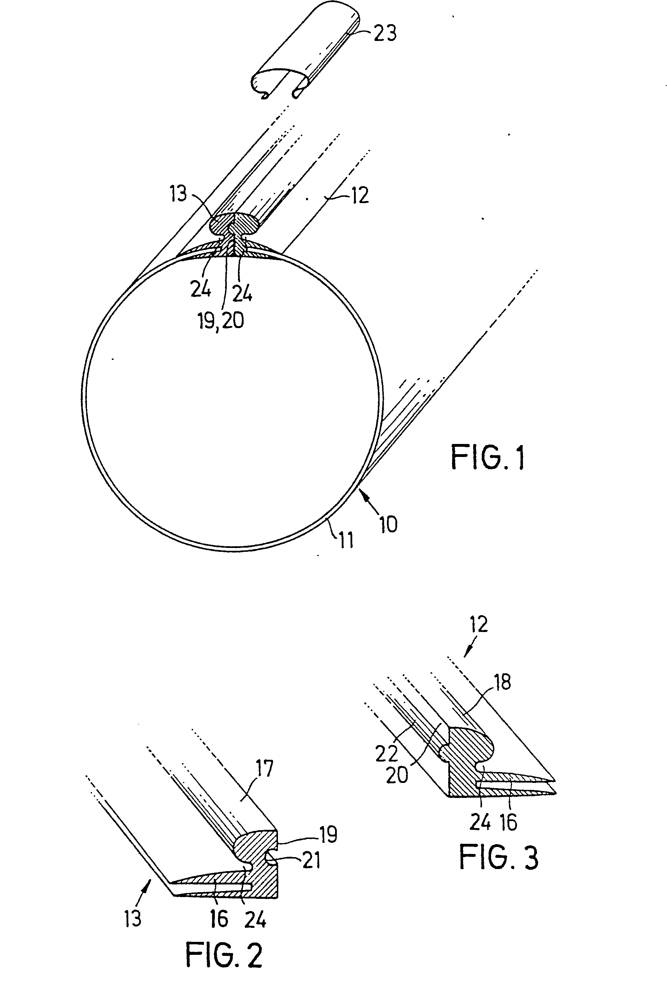

Die Klemmprofilstücke 12, 13 bestehen aus Aluminiumleisten und weisen jeweils einen im Querschnitt U-förmigen Fuß 16 in Form einer längslaufenden Leiste auf, deren innerer Querschnitt sich zum inneren Ende hin verjüngt, und in den die Materialbahn 11 eingeklemmt ist. Von dem dickeren Ende des Fußes 16 steht rechtwinklig das Wulstteil 17 bzw. 18 ab. Die Wulstteile 17 und 18 stoßen mit ebenen Trennflächen 19, 20 gegeneinander. Diese Trennflächen 19, 20 verlaufen gemäß Figur 1 radial zu der geschlossenen Umhüllung. In der Trennfläche 19 befindet sich eine längslaufende, im Querschnitt C-förmige Nut 21, während die Trennfläche 20 einen längslaufenden, im Querschnitt C-förmigen Wulst 22 aufweist. Beim Gegeneinanderdrücken der Klemmprofilstücke 12, 13 rastet der Wulst 22 in der Nut 21 ein, so daß die beiden Klemmprofilstücke 12 und 13 in gegenseitiger Zuordnung festgehalten werden.

Um die aneinander festgeklemmten Klemmprofilstücke 12, 13 wird gemäß Figur 1 die federnde Klammer 23 herumgelegt. Die Klammer 23 ist im Querschnitt im wesentlichen C-förmig und sie umgreift die zusammengesetzten Klemmprofilstücke 12, 13, wobei ihre Schenkel in die Hinterschneidungen 24 greifen, die an den Klemmprofilstücken gebildet sind. Die beiden zusammengesetzten Klemmprofilstücke ergeben einen Wulst mit ovalem Querschnitt, der über einen Steg mit den beiden Füßen 16 in Verbindung steht.

A n s p r ü c h e

1. Flexible Umhüllung für die thermische oder akustische
   Isolierung von Rohren u.dgl., mit einem flexiblen Mantel, der längslaufende zusammengreifende Klemmprofilstücke aufweist, d a d u r c h   g e k e n n z e i c h -
   n e t, daß die Klemmprofilstücke (12, 13) von dem geschlossenen Mantel (10) nach außen abstehen, und daß
   eine die beiden Klemmprofilstücke (12, 13) umgreifende
   Klammer (23) vorgesehen ist.

2. Flexible Umhüllung nach Anspruch 1, dadurch gekennzeichnet, daß die Klemmprofilstücke (12, 13) entlang
   einer im wesentlichen radial zu dem geschlossenen
   Mantel verlaufenden Linie gegeneinanderstoßen.

3. Flexible Umhüllung nach Anspruch 1 oder 2, dadurch
   gekennzeichnet, daß der Mantel (10) eine Materialbahn (11) aufweist, an die die Fußteile (16) der
   Klemmprofilstücke (12, 13) angeschweißt sind.

4. Flexible Umhüllung nach einem der Ansprüche 1 bis 3,
   dadurch gekennzeichnet, daß die Klemmprofilstücke
   (12, 13) im zusammengesetzten Zustand einen hinterschnittenen Wulst bilden, und daß die Klammer (23)
   derart ausgebildet ist, daß sie mit ihren Armen in
   die Hinterschneidungen (24) eingreift und den Wulst
   zangenförmig umspannt.

5. Flexible Umhüllung nach einem der Ansprüche 1 bis 4,
   dadurch gekennzeichnet, daß der Mantel (10) eine die
   Klemmprofilstücke (12, 13) von unten bedeckende Lasche
   (15) aufweist.

0016328

FIG.1

FIG. 2

FIG. 3

0016328

Europäisches
Patentamt

**EUROPÄISCHER RECHERCHENBERICHT**

Nummer der Anmeldung

EP 80 10 0596 .8

| EINSCHLÄGIGE DOKUMENTE | | | KLASSIFIKATION DER ANMELDUNG (Int.Cl.3) |
|---|---|---|---|
| Kategorie | Kennzeichnung des Dokuments mit Angabe, soweit erforderlich, der maßgeblichen Teile | betrifft Anspruch | |
| | CH – A5 – 582 327 (E. RASMUSSEN) <br> * Fig. 2, 3 * <br> -- | 1,2,4 | F 16 L 59/14 |
| | FR –A1 – 2 286 302 (RAYCHEM) <br> * Fig. 3 bis 13 * <br> -- | 1,2,4 | |
| | US – A – 3 587 657 (K.J. STALLER) <br> * Fig. 4, 11 bis 13 * <br> -- | 1,2,4 | |
| | CH – A – 418 072 (J. TRUTZENBERG) <br> * Fig. 1, 2 * <br> -- | 1,2,4 | RECHERCHIERTE SACHGEBIETE (Int. Cl.3) |
| | US – A – 1 645 748 (J.R. GAMMETER) <br> * Fig. 1, 2 * <br> -- | 1,2,4 | F 16 L 59/00 |
| | DE – B – 1 252 489 (VOLKSWAGENWERK) <br> * Fig. 3 * <br> -- | 1,5 | |
| | DE – U – 7 509 227 (C. FREUDENBERG) <br> * Anspruch 1 * <br> -- | 3 | |
| | DE – B – 1 475 841 (W. SPIES) <br> * Anspruch 1 * <br> ---- | 3 | |

Der vorliegende Recherchenbericht wurde für alle Patentansprüche erstellt.

| Recherchenort | Abschlußdatum der Recherche | Prüfer |
|---|---|---|
| Berlin | 04-06-1980 | SCHLABBACH |

EPA form 1503.1 06.78